# EUROPÄISCHE PATENTSCHRIFT

(11) **EP 0 966 204 B1**
(45) Veröffentlichungstag und Bekanntmachung des Hinweises auf die Patenterteilung: **07.05.2003**
(21) Anmeldenummer: 98909438.8
(22) Anmeldetag: 11.02.1998
(51) Int. Cl.: A23G 3/00, A23G 3/04

(54) **VERFAHREN ZUR HERSTELLUNG VON HARTKARAMELLEN UND TABLETTEN**
PROCESS FOR PRODUCING HARD CARAMELS AND TABLETS
PROCEDE DE PRODUCTION DE CARAMELS DURS ET DE COMPRIMES

(30) Priorität: 07.03.1997 DE 19709304
(43) Veröffentlichungstag der Anmeldung: 29.12.1999
(73) Patentinhaber: SÜDZUCKER AKTIENGESELLSCHAFT MANNHEIM/OCHSENFURT, 68165 Mannheim (DE)
(72) Erfinder: WILLIBALD-ETTLE, Ingrid, D-76829 Landau (DE); MIKLA, Ondrej, A-3425 Langenlebarn (AT)
(74) Vertreter: Schrell, Andreas, Dr.
(86) Internationale Anmeldenummer: EP9800750
(87) Internationale Veröffentlichungsnummer: WO98039978

(56) Entgegenhaltungen:
- EP-A- 0 175 160
- EP-A- 0 625 578
- WO-A-97/30598
- DE-A- 2 461 543
- DE-A- 2 520 173
- FR-A- 2 733 122
- GB-A- 2 131 670
- US-A- 4 567 055
- US-A- 4 732 775
- US-A- 4 948 615
- US-A- 5 013 575
- US-A- 5 472 733

## Beschreibung

Die vorliegende Erfindung betrifft ein Verfahren zur Herstellung einer glasartigen Schmelze aus einem Süßungsmittelgemisch.

Die Herstellung von Zuckermassen für Confiseriezwecke mittels eines Extrusionsverfahrens ist bekannt. Die DE 24 61 543 C2 beschreibt ein derartiges Verfahren, bei dem Glucosesirup und Kristallzucker in einen Doppelschnecken-Extruder eingebracht, diese Mischung unter erhöhter Temperatur und erhöhtem Druck durchgeknetet, entspannt und komprimiert wird. Man erhält eine entkristallisierte, geschmolzene Zuckermasse, die zur Herstellung von beispielsweise Hartkaramellen weiter verwendet werden kann.

Aus der US 5,472,733 ist ein Verfahren zur Herstellung einer glasartigen Schmelze bekannt, wobei ein Süßungsmittel in einen Doppelschnecken-Extruder eingebracht, das Süßungsmittel geschmolzen und durch verstellbare Schikanen geführt wird. Es wird beschrieben, daß durch das Einstellen bestimmter, durch ein Druckventil einstellbarer Druckverhältnisse und bestimmter Temperierungen eine glasartige Schmelze erhalten werden kann.

Die beschriebenen Verfahren weisen den Nachteil auf, daß die erhaltene glasartige Schmelze beim Austritt aus dem Extruder vergleichsweise hohe Temperaturen aufweist und daher auf entsprechend langen Kühlbändern abgekühlt werden muß. Dies bedingt einen größeren apparativen Aufwand und einen größeren Bauraum der Kühlbänder sowie verlängerte Kühlzeiten. Zudem muß das Einarbeiten von Aromen und Wirkstoffen bei hohen Temperaturen erfolgen, was sich in vielen Fällen nachteilig auf die Stabilität der eingearbeiteten Aromen und Wirkstoffe auswirkt.

Das der Erfindung zugrundeliegende technische Problem liegt also darin, ein Verfahren zur Herstellung einer für Confiseriezwecke geeigneten, vorzugsweise zuckerfreien, glasartigen Schmelze bereitzustellen, das die vorgenannten Nachteile überwindet, insbesondere zu einem leicht weiter verarbeitbaren Produkt führt.

Das der vorliegenden Erfindung zugrundeliegende technische Problem wird durch die Bereitstellung eines Verfahrens zur Herstellung einer, vorzugsweise zuckerfreien, glasartigen Schmelze aus einem Süßungsmittelgemisch gelöst, wobei das Süßungsmittelgemisch in die Aufgabezone eines Extruders, insbesondere eines Doppelschnecken-Extruders, eingebracht, anschließend in einer Aufschmelzzone unter erhöhter Temperatur, in einer sich daran anschließenden Vakuumierungszone unter vermindertem Druck und erhöhter Temperatur und in einer sich daran anschließenden Kühlzone unter verminderter Temperatur extrudiert und eine glasartige Schmelze erhalten wird. Das erfindungsgemäße Verfahren führt also dazu, daß eine glasartige Schmelze erhalten wird, die beim Austritt aus dem Extruder eine -gegenüber der in der Aufschmelzzone vorherrschenden Temperatur- verminderte Temperatur aufweist und daher wesentlich schneller und auf kürzeren Kühlbändern abgekühlt werden kann. Zudem ist es möglich, in der Kühlzone Aromen und/oder Wirkstoffe, insbesondere pharmazeutische Wirkstoffe, bei niedrigeren Temperaturen einzuarbeiten.

Selbstverständlich ist es auch möglich, die Aromen und/oder Wirkstoffe in das Süßungsmittelgemisch oder Süßungsmittel bereits vor Einbringen in die Aufgabezone einzubringen, wenn die Aromen oder Wirkstoffe temperaturstabil sind.

Der Einsatz von sogenannten "In-Line-Mixern", die üblicherweise zu diesem Zweck beim traditionellen Extrusionsverfahren eingesetzt werden, kann entfallen. Das erfindungsgemäße Verfahren ist ferner insofern vorteilhaft, als daß der apparative Aufwand, insbesondere der Aufbau des Schneckenextruders, vergleichsweise einfach ist. Ein erfindungsgemäß einsetzbarer Schneckenextruder benötigt keine verstellbaren Schikanen oder Schraubenelemente, die den Strom der Extrusionsmasse regulieren und ist kommerziell bei der Firma Togum erhältlich.

Im Zusammenhang mit der vorliegenden Erfindung wird unter einem Süßungsmittel ein Stoff mit ein Süßempfinden auslösenden Eigenschaften verstanden, der je nach konkreter Ausführung in Nahrungsmitteln, Genußmitteln, Pharmazeutica oder ähnlichen Verwendung findet und der als Träger oder Zusatzstoff zu pharmazeutisch aktiven Wirkstoffen, Aromen, Geschmacks-, Geruchs- oder Farbstoffen dienen kann. In besonders vorteilhafter Weise enthält das für das erfindungsgemäße Verfahren eingesetzte Süßungsmittelgemisch 100% der nachgestehend aufgeführten Süßungsmittel oder ein Gemisch mindestens zwei dieser Süßungsmittel. Es kann aber auch vorgesehen sein, daß das Süßungsmittelgemisch nur 1-99%, vorzugsweise 50-95%, der nachstehend genannten Süßungsmittel enthält und zusätzlich Aromen, Wirkstoffe, Mineralien, Salze, Träger- und Füllstoffe, z.B. Polymere, aufweist.

Das Süßungsmittel kann Inulin, Invertzucker, ein aus der DE 25 20 173 A1 bekanntes 1:1-Gemisch aus 6-0-α-D-Glucopyranosyl-D-sorbit (1,6-GPS) und 1-0-α-D-Glucopyranosyl-D-mannit (1,1-GPM), ein in der EP 0 625 578 B1 beschriebenes Süßungsmittel aus 1,6-GPS, 1,1-GPM, 1-0-α-D-Glucopyranosyl-D-sorbit (1,1-GPS), Mannit, Sorbit und Oligosacchariden, Polydextrose, hydriertes und nicht hydriertes Stärkehydrolysat, ein Zuckeralkohol, ein Monosaccharid oder Disaccharid sowie ein Polysaccharid sein. Als Monosaccharid oder Disaccharid kommt insbesondere Xylose, Ribulose, Glucose, Mannose, Fructose, Isomaltose, Isomaltulose, Galactose, Saccharose, Maltose und ähnliches in Betracht. Als Zuckeralkohol kommt Sorbit, Xylit, Mannit, Galactit, Maltit, 1,6-GPS, 1,1-GPS, 1,1-GPM und ähnliches in Betracht.

Im Zusammenhang mit der vorliegenden Erfindung wird unter einer Aufgabezone eines Extruders der Bereich des Extruders verstanden, in den das zu extrudierende Süßungsmittelgemisch eingebracht wird. Unter der Aufschmelzzone wird der Bereich des Extruders verstanden, in dem unter erhöhter Temperatur das Aufschmelzen und Entkristallisieren des eingesetzten Süßungsmittelgemisches stattfindet. Unter der Vakuumierungszone wird der Bereich des Extruders verstanden, in dem die Extrusion unter vermindertem Druck stattfindet. Unter der Kühlzone wird der Bereich des Extruders verstanden, in dem die während des Aufschmelzprozesses erhitzte Extrusionsmasse (Schmelze) graduell abgekühlt wird.

Das erfindungsgemäße Verfahren führt zu einer abgekühlten glasartigen Schmelze, die in vorteilhafter Weise in prägefähiger Form vorliegt.

In einer besonders bevorzugten Ausführungsform der Erfindung liegt in der Aufschmelzzone des Extruders eine Temperatur von 130° C bis 210° C, vorzugsweise von 170° C bis 210° C vor. In besonders vorteilhafter Weise ist vorgesehen, die Aufschmelzzone in mehrere Segmente zu unterteilen, die unterschiedliche Temperaturen aufweisen. Erfindungsgemäß ist es bevorzugt, vier Segmente in der Aufschmelzzone vorzusehen, wobei im ersten Segment eine Temperatur von 177° C, im zweiten Segment eine Temperatur von 205° C, im dritten Segment eine Temperatur von 188° C und im vierten Segment eine Temperatur von 191° C vorherrscht.

In einer weiteren besonders bevorzugten Ausführungsform ist vorgesehen, in der Vakuumierungszone eine Temperatur von 120° C bis 160° C, insbesondere von 133° C, einzustellen.

Die Erfindung sieht bevorzugt vor, in der Vakuumierungszone einen Druck von 0,70 bis 0,98 bar, insbesondere von 0,78 bar, einzustellen.

Gemäß einer weiteren Ausgestaltung der vorliegenden Erfindung wird vorgesehen, in der Kühlzone eine Temperatur von 60° C bis 130° C, vorzugsweise 80° C bis 120° C, einzustellen. Die Erfindung sieht insbesondere vor, die Kühlzone in mehrere Segmente aufzuteilen, in denen unterschiedliche Temperaturen vorliegen. Erfindungsgemäß bevorzugt sind drei Segmente, wobei im ersten Segment eine Temperatur von 120° C, im zweiten Segment eine Temperatur von 120° C und im dritten Segment eine Temperatur von 80° C einzustellen ist.

Die Temperaturangaben beziehen sich auf die Temperatur im Mantel des Extruders und nicht in der Schmelze. Die Temperatur in der Schmelze liegt ca. 20 bis 30° C unterhalb der Manteltemperatur.

Die Erfindung sieht in vorteilhafter Weise vor, den Extruder als Doppelschnecken-Extruder auszuführen.

Selbstverständlich ist die Erfindung mittels beliebiger Extruder durchführbar, solange diese den erfindungsgemäßen Parametern entsprechend konfiguriert werden können.

Die Erfindung sieht in einer besonders bevorzugten Ausführungsform vor, den Extruder an seinem Ende zu verschließen und die Extrusionsmasse nach unten abzuführen. Gemäß dieser Ausführungsform ergibt sich eine besonders klare, blasenarme Schmelze. Selbstverständlich ist es auch möglich, den Extruder an seinem Ende nicht zu verschließen, sondern mit einer Austrittsdüse zu versehen. Die Extrusionsmasse tritt dann nicht nach unten, sondern in geradliniger Verlängerung der Längsachse der Schnecke aus dem Extruder aus.

Die Erfindung betrifft auch eine glasartige Schmelze, die nach einem erfindungsgemäßen Verfahren hergestellt worden ist, einen prägefähigen Strang, der sich beispielsweise zur Herstellung von Hartkaramellen oder Tabletten eignet, und die Schmelze enthaltende Produkte. In vorteilhafter Weise ist bei der Weiterverarbeitung vor der Prägung der Schmelze eine weitere Abkühlung der Schmelze auf Kühlbändern nicht erforderlich.

Die Erfindung betrifft auch eine Verwendung einer glasartigen Schmelze gemäß der vorliegenden Erfindung zur Herstellung von, bevorzugt pharmazeutisch aktive Wirkstoffe enthaltenden, Tabletten, insbesondere durch Verpressen, oder Hartkaramellen.

Die Erfindung betrifft demgemäß auch, vorzugsweise zuckerfreie, Hartkaramellen und Tabletten, die die mittels des erfindungsgemäßen Verfahrens hergestellte Schmelze enthalten und die sich mittels üblicher Verfahren aus dieser Schmelze herstellen lassen.

Weitere vorteilhafte Ausgestaltungen der Erfindung sind den Unteransprüchen zu entnehmen.

Die Erfindung wird im folgenden anhand von Zeichnungen und dazugehörigen Ausführungsbeispielen näher erläutert. Es zeigen:
- Figur 1: schematisch den Aufbau eines erfindungsgemäß einsetzbaren Extruders und
- Figur 2: eine weitere Ausführungsform eines derartigen Extruders, der einen Einlaß zur Dosierung von Wirkstoffen und Aromen aufweist.

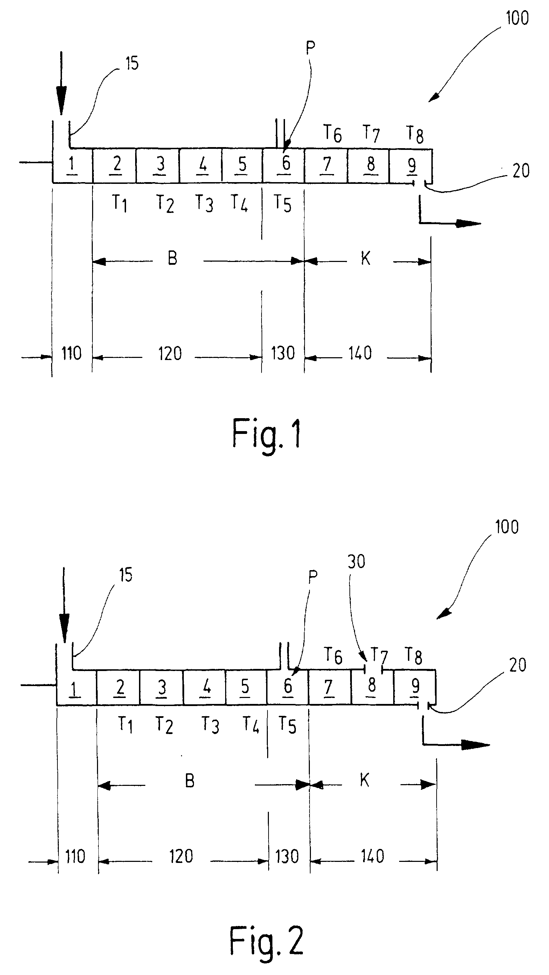

Die Figur 1 verdeutlich in schematischer Weise den Aufbau eines Doppelschnecken-Extruders 100, (Togum, TO-EX 70) mit einem Schneckendurchmesser von 70 mm und einer Länge von ca. 4,0 m. Der Extruder ist mit einer maximalen Leistung von 33 kW ausgeführt und arbeitet mit einer Drehzahl von 8 Umdrehungen pro Minute.

Der Extruder 100 weist an einem Ende eine Aufgabezone 110 auf, die als Segment 1 ausgeführt ist. Das Segment 1 weist eine nach oben gerichtete Öffnung 15 zum Einbringen des Süßungsmittelgemisches (Pfeil) auf. Der Aufgabezone 110 schließt sich die Aufschmelzzone 120 an. Die Aufschmelzzone 120 ist in vier Segmente 2, 3, 4 und 5 unterteilt, wobei in der Zone 2 die Temperatur T₁ 177° C, in der Zone 3 die Temperatur T₂ 205° C, in der Zone 4 die Temperatur T₃ 188° C und in der Zone 5 die Temperatur T₄ 191° C herrscht.

Die Zonen 2 bis 5 sind isoliert und elektrisch beheizt (B).

Der Aufschmelzzone 120 schließt sich die Vakuumierungszone 130 an, die in Form des Segmentes 6 ausgeführt ist und eine Temperatur T₅ 133° C aufweist. Auch hier ist eine elektrische Beheizung B vorgesehen. Dadurch wird während der Vakuumierung aufspritzendes Material abgeschmolzen. In der Vakuumierungszone 6 herrscht ein Luftdruck P von 0,78 bar, der dem Entgasen der Schmelze dient.

An die Vakuumierungszone 130 schließt sich die Kühlzone 140 an, die in Form von drei Segmenten 7, 8, 9 ausgeführt ist. Das Segment 7 weist eine Temperatur T₆ von 120° C, das Segment 8 eine Temperatur von T₇ von 120° C und das Segment 9 eine Temperatur von T₈ von 80° C auf. Segment 9 weist eine nach unten gerichtete Auslaßöffnung 20 auf, aus der die abgekühlte glasartige Schmelze (Pfeil) tritt.

Die Temperaturmessungen erfolgen im Extrudermantel. Die Temperatur der Extrusionsmasse liegt ca. 20 bis 30° unterhalb der Manteltemperatur.

Zur Durchführung der vorliegenden Erfindung eignen sich beispielsweise Doppelschnecken-Extruder der Firma Togum, die im Handel unter dem Namen TO-EX erhältlich und gemäß den Vorgaben der vorliegenden Erfindung einzustellen sind.

### Das erfindungsgemäße Verfahren verläuft wie folgt:

Nachdem mittels elektrischer Beheizung B und durch beispielsweise mittels sogenannter "Single-Geräte" durchgeführter Flüssigkeitskühlung K die genannten Temperaturen in den einzelnen Segmenten des Extruders 100 eingestellt wurden, wird durch die Einlaßöffnung 15 in das Segment 1 Isomalt ^{R} (ein nahezu äquimolares Gemisch aus 1,1-GPM und 1,6-GPS) eingebracht. Das Süßungsmittelgemisch wird in einem Massenstrom von 50 kg Schmelze pro Stunde durch die Doppelschnecken, die sich mit einer Drehzahl von 8 Umdrehungen pro Minute drehen, durch die Aufschmelzzone 120, die Vakuumierungszone 130 und die Kühlzone 140 befördert, wobei das Süßungsmittelgemisch geschmolzen, entgast und abgekühlt wird. Die Schmelze wird nicht mittels gesonderter Knetelemente oder Schikanen bearbeitet. Nach Abkühlung der Schmelze auf oder unter 100° C wird diese aus dem Segment 9 nach unten abgeführt. Man erhält eine klare, blasenarme Schmelze mit einer Temperatur von unter beziehungsweise um 100° C. Die Schmelze weist einen Wassergehalt von deutlich unter 2 Gew.-% auf und kann auf die Temperatur eines prägefähigen Stranges, d.h. etwa 80°C abgekühlt oder direkt geprägt werden.

Zur Herstellung von Hartkaramellen wird der prägefähige Strang zunächst über einen Kegelroller geführt und dann mittels einer üblichen Prägemaschine zu Hartkaramellen geprägt.

Zur Herstellung von Tabletten wird der prägefähige Strang beispielsweise durch Walzen geführt wie z.B. in der EP 0 240 906 B1 beschrieben, und dabei die gewünschte Tablettenform erzeugt.

Die Figur 2 stellt einen im wesentlichen dem Aufbau des Extruders der Figur 1 gleichenden Aufbau eines weiteren Extruders dar, wobei jedoch in der Kühlzone 140, insbesondere im Segment 8, eine Einlaßöffnung 30 vorgesehen ist, durch die pharmazeutisch aktive Wirkstoffe, Aromen, Geschmacksstoffe, Geruchsstoffe oder Farbstoffe zugeleitet werden können. Aufgrund der in der Zone 140 vorliegenden geringeren Temperatur der Schmelze wird das Spektrum der in die Schmelze einarbeitbaren Substanzen und deren Stabilität erhöht.

## Patentansprüche

1. Verfahren zur Herstellung einer glasartigen Schmelze aus mindestens einem Süßungsmittelgemisch mittels eines Extruders, insbesondere eines Doppelschnecken-Extruders, bei dem das Süßungsmittelgemisch in eine Aufgabezone (110) des Extruders (100) eingebracht, in einer Aufschmelzzone (120) unter erhöhter Temperatur, in einer Vakuumierungszone (130) unter vermindertem Druck und erhöhter Temperatur und in einer Kühlzone (140) unter verminderter Temperatur extrudiert und eine glasartige Schmelze erhalten wird.

2. Verfahren nach Anspruch 1, **dadurch gekennzeichnet, daß** in der Aufschmelzzone (120) eine Temperatur von 130° C bis 210° C, insbesondere 170° C bis 210° C, vorliegt.

3. Verfahren nach einem der vorhergehenden Ansprüche, **dadurch gekennzeichnet, daß** in der Vakuumierungszone (130) eine Temperatur von 120° C bis 160° C, insbesondere 133° C, vorliegt.

4. Verfahren nach einem der vorhergehenden Ansprüche, **dadurch gekennzeichnet, daß** in der Vakuumierungszone (130) ein Druck von 0,70 bis 0,98 bar, insbesondere 0,78 bar, vorliegt.

5. Verfahren nach einem der vorhergehenden Ansprüche, **dadurch gekennzeichnet, daß** in der Kühlzone (140) eine Temperatur von 60° C bis 130° C, insbesondere 80° C bis 120° C, vorliegt.

6. Verfahren nach einem der vorhergehenden Ansprüche, **dadurch gekennzeichnet, daß** die Aufschmelzzone (120) in mehrere jeweils unterschiedliche Temperaturen aufweisende Segmente (2,3,4,5), insbesondere vier Segmente (2,3,4,5) mit Temperaturen von 177° C, 205° C, 188° C und 191° C, unterteilt ist.

7. Verfahren nach einem der vorhergehenden Ansprüche, **dadurch gekennzeichnet, daß** die Kühlzone (140) in mehrere jeweils unterschiedliche Temperaturen aufweisende Segmente (7,8,9), insbesondere drei Segmente (7,8,9) mit Temperaturen von 120° C, 120° C und 80° C, unterteilt ist.

8. Verfahren nach einem der vorhergehenden Ansprüche, **dadurch gekennzeichnet, daß** die glasartige Schmelze aus dem letzten Segment (9) des Extruders (100) nach unten abgeführt wird.

9. Verfahren nach einem der vorhergehenden Ansprüche, **dadurch gekennzeichnet, daß** die glasartige Schmelze nach Verlassen des Extruders (100), insbesondere auf Kühlbändern, weiter abgekühlt wird.

10. Verfahren nach einem der vorhergehenden Ansprüche, **dadurch gekennzeichnet, daß** der Extruder (100) mit einer Drehzahl von 8 Umdrehungen pro Minute betrieben wird.

11. Verfahren nach einem der vorhergehenden Ansprüche, **dadurch gekennzeichnet, daß** in der Kühlzone (140) Aromen, Mineralien, Salze, Geschmacks-, Geruchs-, Farbstoffe oder pharmazeutisch aktive Wirkstoffe in die Schmelze eingebracht werden.

12. Verfahren nach einem der vorhergehenden Ansprüche, **dadurch gekennzeichnet, daß** das in dem Süßungsmittelgemisch enthaltende Süßungsmittel ein Monosaccharid, Disaccharid, Polysaccharid, Zukkeralkohol, eine Polydextrose, Maltodextrin, Inulin oder ein Gemisch davon ist.

13. Verfahren nach einem der vorhergehenden Ansprüche, **dadurch gekennzeichnet, daß** das in dem Süßungsmittelgemisch enthaltende Süßungsmittel Xylose, Ribulose, Glucose, Mannose, Galactose, Fructose, Maltose, Invertzucker, hydriertes und nichthydriertes Stärkehydrolysat, Sorbit, Xylit, Lactit, Mannit, Galactit, Maltit, 1,1-GPM (1-0-α-D-Glucopyranosyl-D-mannit), 1,1-GPS (1-0-α-D-Glucopyranosyl-D-sorbit), 1,6-GPS (6-0-α-D-Glucopyranosyl-D-sorbit), Isomaltulose, Maltulose, Saccharose, Trehalulose, Lactulose oder ein Gemisch dieser Stoffe ist.

14. Verfahren nach einem der vorhergehenden Ansprüche, **dadurch gekennzeichnet, daß** das in dem Süßungsmittelgemisch enthaltende Süßungsmittel ein Gemisch, insbesondere ein nahezu äquimolares Gemisch, aus 1,6-GPS (6-0-α-D-Glucopyranosyl-D-sorbit) und 1,1-GPM (1-0-α-D-Glucopyranosyl-D-mannit) ist.

15. Verfahren nach einem der vorhergehenden Ansprüche, **dadurch gekennzeichnet, daß** das in dem Süßungsmittelgemisch enthaltende Süßungsmittel ein Gemisch aus 1,6-GPS (6-0-α-D-Glucopyranosyl-D-sorbit), 1,1-GPM (1-0-α-D-Glucopyranosyl-D-mannit), 1,1-GPS (1-0-α-D-Glucopyranosyl-D-sorbit), Mannit und Sorbit ist.

16. Glasartige Schmelze, herstellbar nach einem der Verfahren gemäß den Ansprüchen 1 bis 15.

17. Verwendung einer glasartigen Schmelze nach Anspruch 16 zur Herstellung von Tabletten oder Hartkaramellen.

18. Tablette, enthaltend eine glasartige Schmelze, herstellbar nach einem der Verfahren gemäß der Ansprüche 1 bis 15.

19. Hartkaramelle, enthaltend eine glasartige Schmelze, herstellbar nach einem der Verfahren gemäß der Ansprüche 1 bis 15.

## Claims

1. Process for the production of a glass-like melt consisting of at least one sweetening agent mixture by means of an extruder, in particular a double screw extruder, wherein the sweetening agent mixture is fed into a feeding zone (110) of the extruder (100), is extruded in a melting zone (120) at elevated temperature, in a vacuuming zone (130) at reduced pressure and elevated temperature and in a cooling zone (140) at reduced temperature and a glass-like melt is produced.

2. Process according to claim 1, **characterised in that** a temperature of 130°C to 210°C, in particular 170°C to 210°C, is present in the melting zone (120).

3. Process according to one of the preceding claims, **characterised in that** a temperature of 120°C to 160°C, in particular 133°C, is present in the vacuuming zone (130).

4. Process according to one of the preceding claims, **characterised in that** a pressure of 0,70 to 0,98 bar, in particular 0,78 bar, is present in the vacuuming zone (130).

5. Process according to one of the preceding claims, **characterised in that** a temperature of 60°C to 130°C, in particular 80°C to 120°C, is present in the cooling zone (140).

6. Process according to one of the preceding claims, **characterised in that** the melting zone (120) is divided into several segments (2, 3, 4, 5) each having different temperatures, in particular four segments (2, 3, 4, 5) with temperatures of 177°C, 205°C, 188°C and 191°C.

7. Process according to one of the preceding claims, **characterised in that** the cooling zone (140) is divided into several segments (7, 8, 9) each having different temperatures, in particular three segments (7, 8, 9) with temperatures of 120°C, 120°C and 80°C.

8. Process according to one of the preceding claims, **characterised in that** the glass-like melt is discharged downwards out of the last segment (9) of the extruder (100).

9. Process according to one of the preceding claims, **characterised in that** the glass-like melt is further cooled after leaving the extruder (100), in particular on cooling belts.

10. Process according to one of the preceding claims, **characterised in that** the extruder (100) is operated at a speed of 8 revolutions per minute.

11. Process according to one of the preceding claims, **characterised in that** in the cooling zone (140) aromas, minerals, salts, flavourings, odour enhancers, colourings or pharmaceutical active substances are introduced into the melt.

12. Process according to one of the preceding claims, **characterised in that** the sweetening agent contained in the sweetening agent mixture is a monosaccharide, disaccharide, polysaccharide, sugar alcohol, a polydextrose, maltodextrin, inulin, or a mixture thereof.

13. Process according to one of the preceding claims, **characterised in that** the sweetening agent contained in the sweetening agent mixture is xylose, ribulose, glucose, mannose, galactose, fructose, maltose, invert sugar, hydrated and non-hydrated starch hydrolysate, sorbitol, xylitol, lactite, mannitol, galactite, maltite, 1,1-GPM (1-O-α-D-glucopyranosyl-D-mannitol), 1,1-GPS (1-0-α-D-glucopyranosyl-D-sorbitol), 1,6-GPS (6-0-α-D-glucopyranosyl-D-sorbitol), iso-maltulose, maltulose, saccharose, trehalulose, lactulose, or a mixture of these substances.

14. Process according to one of the preceding claims, **characterised in that** the sweetening agent contained in the sweetening agent mixture is a mixture, in particular a virtually equimolar mixture, comprising 1,6-GPS (6-0-α-D-glucopyranosyl-D-sorbitol) and 1,1-GPM (1-0-α-D-glucopyranosyl-D-mannitol).

15. Process according to one of the preceding claims, **characterised in that** the sweetening agent contained in the sweetening agent mixture is a mixture comprising 1,6-GPS (6-0-α-D-glucopyranosyl-D-sorbitol), 1,1-GPM (1-0-α-D-glucopyranosyl-D-mannitol), 1,1-GPS (1-0-α-D-glucopyranosyl-D-sorbitol), mannitol and sorbitol.

16. Glass-like melt, which can be produced using one of the processes according to claims 1 to 15.

17. Use of a glass-like melt according to claim 16 for the production of tablets or toffees.

18. Tablet containing a glass-like melt, which can be produced using one of the processes according to claims 1 to 15.

19. Toffee containing a glass-like melt, which can be produced using one of the processes according to claims 1 to 15.

## Revendications

1. Procédé de fabrication d'une masse fondue ressemblant à du verre, composée d'au moins un mélange d'agents édulcorants, en utilisant une extrudeuse, notamment une extrudeuse à double vis, dans laquelle le mélange d'agents édulcorants est introduit dans une zone de chargement (110) de l'extrudeuse (100), est fondu dans une zone de fusion (120) à température élevée, passe dans une zone de mise au vide (130) présentant une pression diminuée et une température augmentée, pour être extrudé à température réduite dans une zone de refroidissement (140) en donnant un produit fondu ressemblant à du verre.

2. Procédé de fabrication selon la revendication 1, **caractérisé en ce que** dans la zone de fusion (120) règne une température de 130°C à 210°C, en particulier 170°C à 210°C.

3. Procédé de fabrication selon l'une des revendications précédentes, **caractérisé en ce que** dans la zone de mise au vide (130) règne une température de 120°C à 160°C, en particulier 133°C.

4. Procédé de fabrication selon l'une des revendications précédentes, **caractérisé en ce que** dans la zone de mise au vide (130) règne une pression de 0,70 à 0,98 bar, en particulier 0,78 bar.

5. Procédé de fabrication selon l'une des revendications précédentes, **caractérisé en ce que** dans la zone de refroidissement (140) règne une température de 60°C à 130°C, en particulier 80°C à 120°C.

6. Procédé de fabrication selon l'une des revendications précédentes, **caractérisé en ce que** la zone de fusion (120) est divisée en plusieurs segments (2, 3, 4, 5) présentant chacun une température différente, en particulier quatre segments (2, 3, 4, 5) présentant des températures de 177°C, 205°C, 188°C et 191°C respectivement.

7. Procédé de fabrication selon l'une des revendications précédentes, **caractérisé en ce que** la zone de refroidissement (140) est divisée en plusieurs segments (7, 8, 9) présentant chacun une température différente, en particulier trois segments (7, 8, 9) à des températures de 120°C, 120°C et 80°C respectivement.

8. Procédé de fabrication selon l'une des revendications précédentes, **caractérisé en ce que** la masse fondue ressemblant à du verre est évacuée vers le bas, à partir du dernier segment (9) de l'extrudeuse (100).

9. Procédé de fabrication selon l'une des revendications précédentes, **caractérisé en ce que** la masse fondue ressemblant à du verre, après sa sortie de l'extrudeuse (100) est refroidie davantage, en particulier sur des bandes de refroidissement.

10. Procédé de fabrication selon l'une des revendications précédentes, **caractérisé en ce que** l'extrudeuse (100) est entraînée à une vitesse de rotation de 8 tours par minute.

11. Procédé de fabrication selon l'une des revendications précédentes, **caractérisé en ce que** dans la zone de refroidissement (140), des arômes, des minéraux, des sels, des produits apportant du goût, de l'odeur, de la couleur ou des produits pharmaceutiques actifs sont introduits dans la masse fondue.

12. Procédé de fabrication selon l'une des revendications précédentes, **caractérisé en ce que** l'agent édulcorant contenu dans le mélange d'agents édulcorants est une des matières suivantes ou un mélange de celles-ci : monosaccharide, disacchararide, polysaccharide, alcool de sucre, polydextrose, maltodextrine, inuline.

13. Procédé de fabrication selon l'une des revendications précédentes, **caractérisé en ce que** l'agent édulcorant contenu dans le mélange d'agents édulcorants est une des matières suivantes ou un mélange de celles-ci : xylose, ribulose, glucose, manose, galactose, fructose, maltose, sucre inverti, hydrolysat d'amidon hydraté ou non, sorbite, xylite, lactite, mannite, galactite, maltite, 1,1-GPM (1-0-α-D-glucopyranosyl-D-mannite), 1,1-GPS (1-0-α-D-glucopyranosyl-D-sorbite), 1,6 GPS (6-0-α-D-glucopyranosyl-D-sorbite), isomaltulose, maltulose, saccharose, trehalulose, lactulose.

14. Procédé de fabrication selon l'une des revendications précédentes, **caractérisé en ce que** l'agent édulcorant contenu dans le mélange d'agents édulcorants est un mélange, en particulier un mélange à peu près équimoléculaire composé de 1,6-GPS (6-0-α-D-glucopyranosyl-D-sorbite) et de 1,1-GPM (1-0-α-D-glucopyranosyl-D-mannite).

15. Procédé de fabrication selon l'une des revendications précédentes, **caractérisé en ce que** l'agent édulcorant contenu dans le ménage d'agents édulcorants est un mélange composé de 1,6-GPS (6-0-α-D-glucopyranosyl-D-sorbite) de 1,1-GPM (1-O-α-D-glucopyranosyl-D-mannite), de 1,1-GPS (1-0-α-D-glucopyranosyl-D-sorbite), de mannite et de sorbite.

16. Masse fondue ressemblant à du verre qui peut être fabriquée selon les revendications 1 à 15.

17. Utilisation d'une masse fondue ressemblant à du verre selon la revendication 16 pour fabriquer des comprimés ou des caramels durs.

18. Comprimé contenant une masse fondue ressemblant à du verre, qui peut être fabriqué par un des procédés selon les revendications 1 à 15.

19. Caramel dur contenant une masse fondue ressemblant à du verre, qui peut être fabriqué par un des procédés selon les revendications 1 à 15.
